# EUROPÄISCHE PATENTSCHRIFT

(11) **EP 1 306 594 B1**
(45) Veröffentlichungstag und Bekanntmachung des Hinweises auf die Patenterteilung: **24.11.2004**
(21) Anmeldenummer: 02078930.1
(22) Anmeldetag: 23.09.2002
(51) Int. Cl.: F16K 1/36

(54) **Ventil, insbesondere Heizkörperventil**
Valve, especially radiator valve
Soupape, en particulier soupape de radiateur

(30) Priorität: 25.10.2001 DE 10152870
(43) Veröffentlichungstag der Anmeldung: 02.05.2003
(73) Patentinhaber: Danfoss A/S, 6430 Nordborg (DK)
(72) Erfinder: Messmer, James David, 8000 Aarhus (DK)

(56) Entgegenhaltungen:
- WO-A-00/29771
- DE-A- 10 016 258
- DE-U- 29 613 267
- GB-A- 2 008 228
- US-A- 3 276 741
- US-A- 5 054 742

## Beschreibung

Die Erfindung betrifft ein Heizkörperventil mit einem Ventilgehäuse, in dem ein Ventilsitz angeordnet ist, und mit einem Schließelement, das ein Stützelement aufweist, das auf den Ventilsitz zu oder von ihm weg bewegbar ist, wobei zwischen dem Stützelement und dem Ventilsitz ein Dichtkörper aus einem weichen Material angeordnet ist und wobei das Schliesselement nicht nur durch den Ventilsitz hindurch sondern auch in umgekehrter Richtung anströmbar ist.

Derartige Ventile sind vielfach bekannt. Beispiele zeigen US 3 658 291 A, US 3 310 277 A, WO 99/22282 A1 oder US 4 475 711 A. Der Dichtkörper dient dazu, die eigentliche Abdichtung zu bewirken, wenn das Ventil geschlossen ist. Aus diesem Grunde muß der Dichtkörper weicher sein als das Teil, mit dem er zusammenwirkt, üblicherweise der Ventilsitz. Die Weichheit und die damit verbundene Nachgiebigkeit hat jedoch den Nachteil, daß Ventile, die so aufgebaut sind, zu Schwingungen neigen. Diese Schwingungen führen zu Geräuschen, die sich insbesondere durch Heizungsleitungen relativ weiträumig ausbreiten können.

Der Erfindung liegt die Aufgabe zugrunde, ein Ventil geräuschdämmend auszugestalten.

Diese Aufgabe wird bei einem Ventil der eingangs genannten Art dadurch gelöst, daß der Dichtkörper in einem Überdeckungsbereich von Ventilsitz und Stützelement eine Dicke im Bereich von 0,3 bis 1,2 mm aufweist.

Bei dieser Ausgestaltung sorgt man dafür, daß hinter der Stelle, an der der Dichtkörper an seinem Gegenstück anliegt, eine "Verstärkung" vorhanden ist. Die Weichheit des Dichtkörpers beschränkt sich an dieser Stelle also im Grunde genommen auf seine Oberfläche. Der Dichtkörper ist hier lokal nach wie vor so nachgiebig, daß er kleinere Unebenheiten des Gegenstücks ausgleichen kann, so daß die Dichtigkeit des geschlossenen Ventils gewährleistet ist. Gleichzeitig ist aber die Möglichkeit des Dichtkörpers begrenzt, in nennenswertem Maße einzufedern, weil aufgrund des Stützelements nur eine sehr dünne Schicht des Dichtkörpers zur Verfügung steht, die verformbar ist. Dadurch wird der Dichtkörper in sich so steif, daß ein Schwingen des Schließelements, das auch als Ventilkegel bezeichnet werden kann, mit hoher Zuverlässigkeit vermieden wird. Diese Ausgestaltung hat darüber hinaus den Vorteil, daß das Schließverhalten des Ventils präziser wird. Das Schließelement kann beim Schließen nicht anfangen zu "hüpfen", sondern es legt sich gleich an den Ventilsitz an und dichtet ab. Dies gilt auch dann, wenn das Schließelement nicht durch den Ventilsitz angeströmt wird, sondern in umgekehrter Richtung. Der Dichtkörper wird zwar in den meisten Fällen am Ventilkegel befestigt sein. Er kann aber auch am Ventilsitz angeordnet sein.

Vorzugsweise liegt die Dicke im Bereich von 0,4 bis 0,8 mm. In diesem Bereich zeigen sich besonders gute Ergebnisse.

Bevorzugterweise weist der Dichtkörper eine Härte im Bereich von 70 bis 90 shore NBR rubber auf. Das Material ist dann weich genug, um die Dichtung zu bewirken. Es weist andererseits aber eine ausreichende Härte auf, um eine Schwingungsneigung herabzusetzen.

Bevorzugterweise ist der Dichtkörper als Gießteil ausgebildet, das an das Stützelement oder den Ventilsitz angegossen ist. Die Ausbildung des Dichtkörpers als Gießteil erlaubt eine rationelle und einfache Fertigung. Die oben angegebenen Grenzen von 0,3 bzw. 0,4 mm erlauben es noch, das Teil zu gießen.

Vorzugsweise hat das Stützelement eine radiale Erstreckung, die bis auf einen Toleranzfehler der radialen Erstreckung einer Berührungslinie zwischen Ventilsitz und Dichtkörper entspricht. Damit erfolgt die Unterstützung des Dichtkörpers durch das Stützelement genau an der Stelle, wo der Dichtkörper am Ventilsitz anliegt. Auf den Dichtkörper wirkende Kräfte können dann durch äußere Bereiche des Dichtkörpers aufgenommen werden. In Schließrichtung ist der Dichtkörper aber durch das Stützelement ausreichend unterstützt.

Hierbei ist bevorzugt, daß der Toleranzfehler ± 0,5 mm beträgt. Diese Toleranz reicht aus, um die gewünschte Wirkung sicherzustellen.

In einer bevorzugten Ausgestaltung ist vorgesehen, daß das Stützelement nach Art eines Bechers ausgebildet ist, der sich zum Ventilsitz hin öffnet. Das Stützelement ist also im Bereich der Berührungsstelle von Dichtkörper und Ventilsitz als ringförmige Verstärkung ausgebildet, so daß genau an der Stelle, wo eine Verformung des Dichtkörpers erfolgt, die notwendige Verstärkung gegeben ist. Die übrigen Teile des Dichtkörpers sind hingegen stärker verformbar.

Bevorzugterweise weist der Becher einen Rand auf, der radial nach außen umgeformt ist. Mit dieser Ausgestaltung wird die Fläche, auf der das Stützelement den Dichtkörper stützt, geringfügig in Radialrichtung vergrößert. Außerdem wird der Dichtkörper besser auf dem Stützelement gehalten.

Auch ist von Vorteil, wenn das Innere des Bechers teilweise mit dem Material des Dichtkörpers gefüllt ist. Dies vereinfacht die Fertigung. Wenn der Dichtkörper durch Öffnungen im Stützelement hindurchgreifen kann, wird er zuverlässig festgehalten.

Bevorzugterweise weist der Dichtkörper eine Konusform auf, die die Dicke in einem Bereich, der zwischen Stützelement und Ventilsitz angeordnet ist, aufweist. In den übrigen Bereichen, beispielsweise radial weiter nach innen, kann der Dichtkörper durchaus eine größere Dicke aufweisen. Die auf die oben angegebenen Werte beschränkte Dicke ist lediglich dort erforderlich, wo durch die Schließbewegung Kompressionskräfte auf den Stützkörper ausgeübt werden. Die Konusform setzt das Durchflußgeräusch herab.

In einer alternativen Ausgestaltung ist vorgesehen, daß das Stützelement als flache Scheibe ausgebildet ist. Diese flache Scheibe ist von einer dünnen Schicht aus dem Material umgeben, die den Stützkörper bildet.

Die Erfindung wird im folgenden anhand von bevorzugten Ausführungsbeispielen in Verbindung mit der Zeichnung näher beschrieben. Hierin zeigen:
- Fig. 1: ein Heizkörperventil,
- Fig. 2: eine abgewandelte Ausführungsform eines Schließelements und
- Fig. 3: einen vergrößerten Ausschnitt aus Fig. 1.

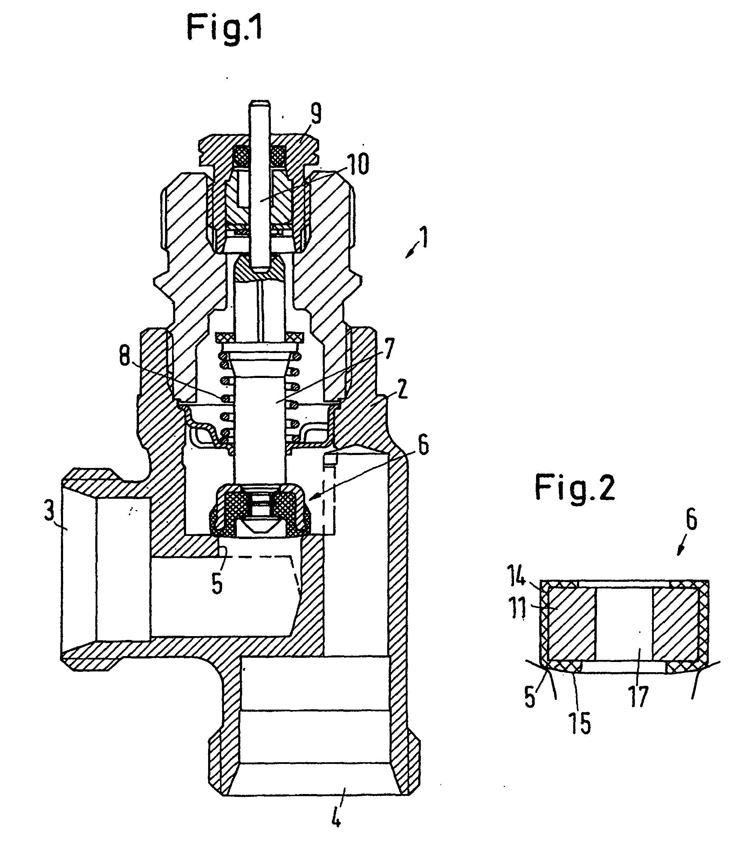

Fig. 1 zeigt ein Heizkörperventil 1 mit einem Gehäuse 2, in dem ein Einlaßanschluß 3 und ein Auslaßanschluß 4 vorgesehen sind. Zwischen dem Einlaßanschluß 3 und dem Auslaßanschluß 4 ist ein Ventilsitz 5 angeordnet, der mit Hilfe eines Schließelements 6 geöffnet oder verschlossen werden kann. In der dargestellten Position des Schließelements 6 liegt das Schließelement 6 am Ventilsitz 5 an und das Heizkörperventil 1 ist geschlossen.

Das Schließelement 6 wird bewegt über eine Ventilspindel 7, die von einer Feder 8 in Öffnungsrichtung vorgespannt ist. Auf den Ventilkegel 7 wirkt ein durch eine Stopfbuchse 9 geführter Betätigungsstift 10, auf den ein nicht näher dargestellter Betätigungsaufsatz, beispielsweise ein Thermostataufsatz, wirkt.

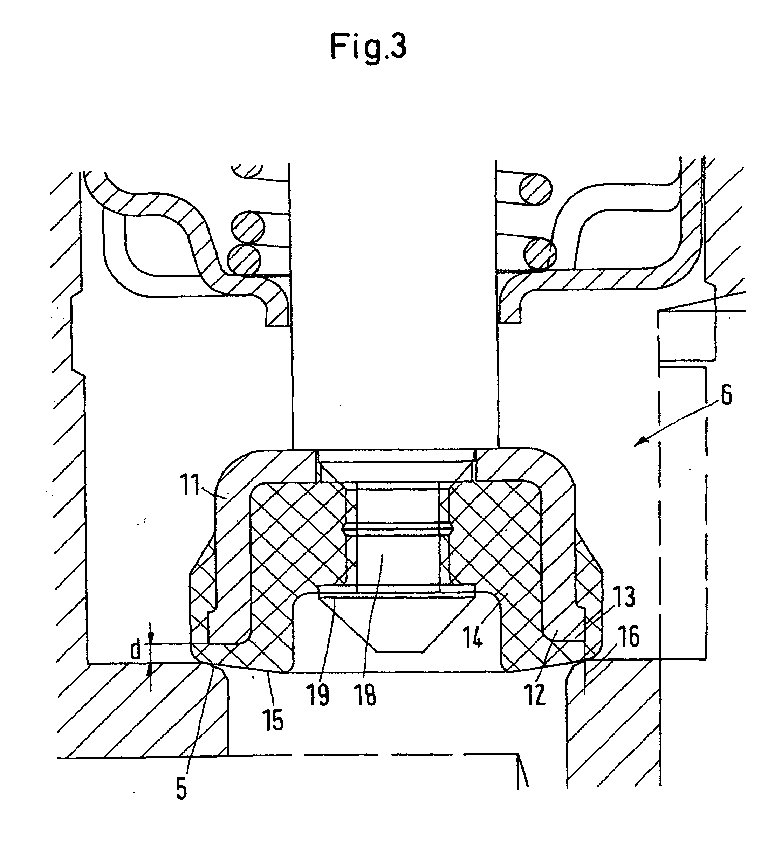

Der nähere Aufbau des Schließelements 6 ist aus Fig. 3 zu erkennen.

Das Schließelement 6 weist ein Stützelement 11 auf, das aus einem relativ festen Material gebildet ist. Beispiele hierfür sind Metalle, wie Eisen, Messing oder Bronze. Es ist aber auch möglich, entsprechend belastbare Kunststoffe zu verwenden. Das Stützelement hat im vorliegenden Fall die Form eines Bechers, dessen Öffnung auf den Ventilsitz 5 zu weist.

Das Stützelement 11 hat auf seiner dem Ventilsitz 5 zugewandten Stirnseite einen Rand 12, der nach außen umgeformt ist. Dadurch entsteht eine Stützfläche 13, die in Radialrichtung etwas größer ist als die Querschnittsfläche des Stützelements 11.

An das Stützelement 11 angespritzt ist ein Dichtkörper 14, der auf seiner dem Ventilsitz 5 zugewandten Seite 15 die Form eines Konus mit einem relativ flachen Steigungswinkel hat. Die (fiktive) "Spitze" des Konus reicht dabei in die Öffnung hinein, die durch den Ventilsitz 5 umgrenzt ist. Ein Teil des Dichtkörpers 14 befindet sich im Innern des Stützelements 11.

Der Dichtkörper 14 ist aus einem gummiartigen Material gebildet, das eine Härte von 80 shore NBR rubber aufweist.

Von besonderer Bedeutung ist, daß der Dichtkörper in dem Bereich zwischen Schließelement 11 und Ventilsitz 5 nur eine relativ geringe Dicke d aufweist. Diese Dicke liegt im Bereich von 0,3 bis 1,2 mm, vorzugsweise von 0,4 bis 0,8 mm. Diese dünne Dicke muß nicht über die gesamte Querschnittsfläche des Dichtkörpers 14 vorliegen. Es reicht aus, wenn diese dünne Schicht in einem Bereich vorliegt, der zwischen dem Ventilsitz 5 und der Stützfläche 13, genauer gesagt dem Bereich der Stützfläche 13, die mit dem Ventilsitz zusammenwirkt, liegt. Dadurch ist gewährleistet, daß der Dichtkörper 14 in dem Bereich, wo er durch Schließkräfte komprimiert werden kann, zuverlässig durch das Stützelement 11 unterstützt wird, d.h. der Dichtkörper 14 kann nur in einem ganz begrenzten Umfang verformt werden.

Wenn beispielsweise die Strömungsrichtung durch das Gehäuse nicht vom Einlaßanschluß 3 zum Auslaßanschluß 4 gerichtet ist, sondern umgekehrt, ist aufgrund der begrenzten Verformbarkeit des Dichtkörpers 14 im Bereich des Ventilsitzes 5 die Schwingungsneigung des Schließelements 6 ganz wesentlich herabgesetzt. Das Schließelement 6 fängt also nicht an zu hüpfen oder zu springen, wenn es bei einer Schließbewegung an dem Ventilsitz 5 zur Anlage kommt. Die Verstärkung durch das Stützelement 11 bewirkt eine Dämpfung in der Weise, daß der Dichtkörper beim Schließen gleich abdichtet und zwar auch dann, wenn das Ventil mit einem "falschen" Strömungsweg betrieben wird.

Im übrigen sind die verbesserten Dämpfungseigenschaften aber auch dann wirksam, wenn der Strömungsweg vom Einlaßanschluß 3 zum Auslaßanschluß 4 verläuft.

Man kann nun auch vorsehen, daß das Stützelement 11 praktisch die gleiche radiale Ausdehnung hat, wie eine Berührungslinie zwischen dem Stützkörper 14 und dem Ventilsitz 5. Diese Berührungslinie 16 ist in Fig. 3 durch einen vertikal verlaufenden Strich verdeutlicht. Ein Toleranzfehler von ± 0,5 mm, um den die Stützfläche 13 in radialer Richtung größer oder kleiner sein kann als die Berührungslinie 16, ist natürlich zulässig.

Fig. 2 zeigt eine abgewandelte Ausführungsform eines Schließelements, bei der gleiche und einander entsprechende Teile mit den gleichen Bezugszeichen wie in Fig. 1 und 3 versehen sind.

Das Schließelement 6 weist ein Stützelement 11 auf, das als Hohlzylinder ausgebildet ist. Der Hohlzylinder weist eine Öffnung 17 auf, die als Befestigung für den Ventilkegel 7 dient. Diese Befestigung kann, wie in Fig. 1 auch, dadurch erfolgen, daß der Dichtkörper um einen unteren Endabschnitt 18 mit Halteprofil 19 des Ventilkegels 7 herum gespritzt ist. Es ist auch möglich, dort eine Schraube hindurchzuführen, die im Ventilkegel 7 eingeschraubt ist.

Das Stützelement 11 ist vom Dichtkörper 14 so umgeben, daß der Dichtkörper 14 das Stützelement 11 quasi allseitig einschließt. Auf der Unterseite 15 ist der Dichtkörper 14 wieder konusartig ausgebildet. Er weist aber im Bereich des Ventilsitzes 5, also an der Schließkante des Ventilsitzes 5, die geringe Dicke von nur 0,3 bis 1,2 mm auf.

## Patentansprüche

1. Heizkörperventil mit einem Ventilgehäuse, in dem ein Ventilsitz angeordnet ist, und mit einem Schließelement (6), das ein Stützelement (11) aufweist, das auf den Ventilsitz (5) zu oder von ihm weg bewegbar ist, wobei zwischen dem Stützelement (11) und dem Ventilsitz (5) ein Dichtkörper (14) aus einem weichen Material angeordnet ist und wobei das Schliesselement (6) nicht nur durch den Ventilsitz (5) hindurch, sondern auch in umgekehrter Richtung anströmbar ist, **dadurch gekennzeichnet, daß** der Dichtkörper (14) in einem Überdeckungsbereich von Ventilsitz (5) und Stützelement (11) eine Dicke (d) im Bereich von 0,3 bis 1,2 mm aufweist.

2. Ventil nach Anspruch 1, **dadurch gekennzeichnet, daß** die Dicke (d) im Bereich von 0,4 bis 0,8 mm liegt.

3. Ventil nach Anspruch 1 oder 2, **dadurch gekennzeichnet, daß** der Dichtkörper (14) eine Härte im Bereich von 70 bis 90 shore NBR rubber aufweist.

4. Ventil nach einem der Ansprüche 1 bis 3, **dadurch gekennzeichnet, daß** der Dichtkörper (14) als Gießteil ausgebildet ist, das an das Stützelement (11) oder den Ventilsitz (5) angegossen ist.

5. Ventil nach einem der Ansprüche 1 bis 4, **dadurch gekennzeichnet, daß** das Stützelement (11) eine radiale Erstreckung hat, die bis auf einen Toleranzfehler der radialen Erstreckung einer Berührungslinie (16) zwischen Ventilsitz (5) und Dichtkörper (14) entspricht.

6. Ventil nach Anspruch 5, **dadurch gekennzeichnet, daß** der Toleranzfehler ± 0,5 mm beträgt.

7. Ventil nach einem der Ansprüche 1 bis 6, **dadurch gekennzeichnet, daß** das Stützelement (11) nach Art eines Bechers ausgebildet ist, der sich zum Ventilsitz (5) hin öffnet.

8. Ventil nach Anspruch 7, **dadurch gekennzeichnet, daß** der Becher einen Rand (12) aufweist, der radial nach außen umgeformt ist.

9. Ventil nach Anspruch 7 und 8, **dadurch gekennzeichnet, daß** das Innere des Bechers teilweise mit dem Material des Dichtkörpers (14) gefüllt ist.

10. Ventil nach einem der Ansprüche 1 bis 9, **dadurch gekennzeichnet, daß** der Dichtkörper (14) eine Konusform (15) aufweist, die die Dicke (d) in einem Bereich, der zwischen Stützelement (11) und Ventilsitz (5) angeordnet ist, aufweist.

11. Ventil nach einem der Ansprüche 1 bis 9, **dadurch gekennzeichnet, daß** das Stützelement als flache Scheibe ausgebildet ist.

## Claims

1. Radiator valve with a valve housing, in which a valve seat is located, and with a closure element (6) having a support element (11), which can be moved in the direction of or away from the valve seat (5), a sealing member (14) made of a soft material being arranged between the support element (11) and the valve seat (5), the flow towards the closure element (6) being possible not only through the valve seat (5) but also in the opposite direction, **characterised in that**, in an overlapping area of the valve seat (5) and the support element (11), the sealing member (14) has a thickness (d) in the area from 0.3 to 1.2 mm.

2. Valve according to claim 1, **characterised in that** the thickness (d) is in the area between 0.4 and 0.8 mm.

3. Valve according to claim 1 or 2, **characterised in that** the sealing member (14) has a hardness in the area from 70 to 90 shore NBR rubber.

4. Valve according to one of the claims 1 to 3, **characterised in that** the sealing member (14) is a casting, which is cast onto the support element (11) or the valve seat (5).

5. Valve according to one of the claims 1 to 4, **characterised in that** the support element (11) has a radial extension, which, except for a tolerance error, corresponds to the radial extension of a contact line (16) between the valve seat (5) and the sealing member (14).

6. Valve according to claim 5, **characterised in that** the tolerance error is ±0.5 mm.

7. Valve according to one of the claims 1 to 6, **characterised in that** the support element (11) has the form of a cup, which opens in the direction of the valve seat (5).

8. Valve according to claim 7, **characterised in that** the cup has an edge (12), which is reshaped radially outwards.

9. Valve according to claims 7 and 8, **characterised in that** the inside of the cup is partly filled with the material of the sealing member (14).

10. Valve according to one of the claims 1 to 9, **characterised in that** the sealing member (14) has a cone shape (15), which has the thickness (d) in an area, which is located between the support element (11) and the valve seat (5).

11. Valve according to one of the claims 1 to 9, **characterised in that** the support element has the form of a flat disc.

## Revendications

1. Vanne de radiateur dotée d'un corps de vanne, dans laquelle est disposé un siège de vanne, et avec un élément de fermeture (6), qui présente un élément de renfort (11), qui est déplaçable depuis ou vers le siége de vanne (5), un corps d'étanchéité (14) en matériau souple étant disposé entre l'élément de renfort (11) et le siège de vanne (5), et l'élément de fermeture (6) pouvant être traversé non seulement par un flux s'éloignant du siége de vanne (5) mais aussi dans le sens inverse, **caractérisée en ce que** le corps d'étanchéité (14) présente dans la zone de recouvrement du siège de vanne (5) et de l'élément de renfort (11), une épaisseur (d) sur une zone de 0,3 à 1,2 mm.

2. Vanne selon la revendication 1, **caractérisée en ce que** l'épaisseur (d) est comprise dans un domaine qui s'étend de 0,4 à 0,8 mm.

3. Vanne selon la revendication 1 ou 2, **caractérisée en ce que** le corps d'étanchéité (14) présente une dureté comprise entre 70 et 90 shore NBR rubber.

4. Vanne selon l'une des revendications 1 à 3, **caractérisée en ce que** le corps d'étanchéité (14) obtenu par moulage, est moulé sur l'élément de renfort (11) ou sur le siège de vanne (5).

5. Vanne selon l'une des revendications 1 à 4, **caractérisée en ce que** l'élément de renfort (11) présente un allongement radial qui correspond, jusqu'à l'allongement radial avec une certaine tolérance, à la ligne de contact (16) entre le siège de vanne (5) et le corps d'étanchéité (14).

6. Vanne selon la revendication 5, **caractérisée en ce que** la tolérance est de ± 0,5 mm.

7. Vanne selon l'une des revendications 1 à 6, **caractérisée en ce que** l'élément de renfort (11) est conçu à la manière d'un godet qui s'ouvre vers le siège de vanne (5).

8. Vanne selon la revendication 7, **caractérisée en ce que** le godet présente un bord (12), déformé radialement vers l'extérieur.

9. Vanne selon la revendication 7 ou 8, **caractérisée en ce que** l'intérieur du godet est partiellement rempli du matériau composant le corps d'étanchéité (14).

10. Vanne selon l'une des revendications 1 à 9, **caractérisée en ce que** le corps d'étanchéité (14) possède une forme conique (15), qui présente l'épaisseur (d) dans une zone située entre l'élément de renfort (11) et le siège de la vanne (5).

11. Vanne selon l'une des revendications 1 à 9, **caractérisée en ce que** l'élément de renfort a la forme d'un disque plat.
